# EUROPEAN PATENT SPECIFICATION

(11) **EP 3 235 664 B1**
(45) Date of publication and mention of the grant of the patent: **04.03.2020**
(21) Application number: 17163896.8
(22) Date of filing: 30.03.2017
(51) Int. Cl.: B60C 15/04, B60C 15/024, B60C 5/14

(54) **PNEUMATIC TIRE**
LUFTREIFEN
PNEUMATIQUE

(30) Priority: 18.04.2016 JP 2016082806
(43) Date of publication of application: 25.10.2017
(73) Proprietor: Sumitomo Rubber Industries, Ltd., Kobe-shi, Hyogo-ken (JP)
(72) Inventor: UEDA, Kenji, Kobe-shi, Hyogo 651-0072 (JP)
(74) Representative: Manitz Finsterwald Patent- und Rechtsanwaltspartnerschaft mbB

(56) References cited:
- EP-A1- 2 910 392
- EP-A1- 3 000 625
- WO-A1-2015/105087
- GB-A- 2 004 508
- JP-A- 2010 012 829
- JP-A- 2014 162 283

## Description

### BACKGROUND OF THE INVENTION

### Field of the Invention

The present invention relates to pneumatic tires.

### Description of the Related Art

A tire is mounted on a rim by beads of the tire being fitted onto the rim. The rim is fastened by the beads which have been fitted onto the rim. The tire is fixed to the rim by the fastening force. When a vehicle rapidly accelerates or rapidly decelerates, great force is generated in the circumferential direction between the rim and the beads. In a case where fastening force of the beads is not sufficient, "rim shifting" in which a rim shifts from a bead may occur. The rim shifting may cause reduction of steering stability or vibration of a vehicle during running.

Reduction of a diameter of a core of a bead relative to a rim diameter leads to increase of fastening force of the bead. Thus, the rim shifting can be inhibited. However, in a case where the diameter of the core of the bead is reduced, fitting pressure needs to be high when the beads are fitted onto the rim. The tire requires an increased time and labor for mounting the tire on the rim. In the tire, the bead may be partially twisted due to influence of the high fitting pressure. The twisting may cause incomplete fitting.

A tire that allows mountability on a rim to be advantageously achieved while variation in fastening force of beads is reduced, is disclosed in JP2014-94694 (US2015/283865). In the tire, an insulation and cushion layers are provided inward of the beads.

Rim-shifting preventing performance and mountability on a rim are required to be further improved. A tire is mounted on a normal rim in general. For the normal rim, a rim diameter as a reference (in the description herein, referred to as a reference diameter), and an allowable rim diameter range (upper limit value and lower limit value) are defined. Also for a rim in which the rim diameter indicates the lower limit value in a standard, fastening force, of beads, sufficient for preventing rim shifting needs to be maintained. Also for a rim in which the rim diameter indicates the upper limit value in the standard, fitting pressure that allows the tire to be easily mounted to the rim needs to be maintained.

In conventional tires, a proportion (fastening force gradient) of change of fastening force of a bead relative to change of a rim diameter, is great. In the tire, fastening force of a bead for a rim in which a rim diameter indicates the lower limit value, is greatly reduced. If sufficient fastening force of the bead is to be obtained by reduction of a bead diameter for the rim, the bead diameter needs to be greatly reduced. In this case, fitting pressure is further increased for a rim in which a rim diameter indicates the upper limit value. Further, in conventional tires, fastening force of a bead greatly varies even among rims having the same rim diameter. Thus, it has been difficult to improve both rim-shifting preventing performance and mountability on a rim.

WO 2015/105087 A1 discloses a pneumatic tire according to the preamble of claim 1.

In EP 2 910 392 A1, a pneumatic tire using a related technology is described.

JP 2010 012829 A discloses a pneumatic tire having an enlarged curvature of an arc in a bead portion.

EP 3 000 625 A1 discloses a a pneumatic tire comprising a bottom surface of a bead portion whose angle with respect to an axial direction of the tire is in the range of 17.5° to 19.5°.

In GB 2 004 508 A, a pneumatic tire employing a related technology is disclosed.

JP 2014 162 283 A discloses a pneumatic tire comprising an inner liner and chafers.

An object of the present invention is to provide a pneumatic tire that allows both rim-shifting preventing performance and mountability on a rim to be advantageously achieved.

### SUMMARY OF THE INVENTION

A pneumatic tire according to the present invention includes a pair of beads. Each bead includes a core. The core has a helical structure in which at least one non-stretchable wire extends almost in a circumferential direction. On a cross-section obtained by the core being cut at a plane perpendicular to the circumferential direction, three or more rows in each of which cross-sections of the wire are aligned almost in an axial direction, are layered in a radial direction. When, among the rows, a row disposed on an innermost side in the radial direction is a first row, and a row layered outward of the first row is a second row, the cross-sections of the wire in the first row and the cross-sections of the wire in the second row are staggered. A number N1 of the cross-sections of the wire in the first row is less, by one, than a number N2 of the cross-sections of the wire in the second row. Positions of outer side ends of at least two of the rows are equal to each other in a direction in which each row extends, and the outer side ends are disposed outward of an outer side end of other of the rows. Positions of inner side ends of at least two of the rows are equal to each other in the direction in which each row extends, and the inner side ends are disposed inward of an inner side end of other of the rows. On a cross-section obtained by the tire being cut at a plane perpendicular to the circumferential direction, an outline of a heel surface of a bead portion of each bead has an arc C that projects toward an outside of the bead portion. A radius R of curvature of the arc C is greater than or equal to 9 mm and not greater than 11 mm.

On a cross-section obtained by the tire being cut at a plane perpendicular to the circumferential direction, an angle of a bottom surface of the bead portion relative to the axial direction is greater than or equal to 15° and not greater than 20°.

The inventors have studied the shape of the bead in order to improve rim-shifting preventing performance and mountability on a rim. As a result, the inventors have found that, when the cross-sections of the wire are appropriately aligned in each core cross-section and the heel surface of each bead portion is appropriately shaped, fitting pressure can be reduced while reducing variation in fastening force of the bead and a fastening force gradient. In the pneumatic tire according to the present invention, both for a rim having an upper limit rim diameter in a standard and for a rim having a lower limit rim diameter in the standard, rim-shifting preventing performance and mountability on a rim are advantageously achieved.

Preferably, a width, in the axial direction, of the arc C is greater than or equal to 6.0 mm and not greater than 7.0 mm.

The tire may further include an inner liner and chafers. Preferably, the inner liner includes a main layer that forms an inner surface of the tire, and a tie gum layer layered over the main layer. The main layer extends, in portions inward of the beads in the radial direction, up to portions outward of the chafers in the radial direction.

### BRIEF DESCRIPTION OF THE DRAWINGS

FIG. 1 is a cross-sectional view of a part of a pneumatic tire according to one embodiment of the present invention;
FIG. 2 is a schematic diagram illustrating a core portion of the tire shown in FIG. 1;
FIG. 3 is a schematic diagram illustrating a structure of a wire in a core of a conventional tire;
FIG. 4 is a conceptual diagram illustrating a relationship between a radius of curvature of a heel surface and a fastening force gradient;
FIG. 5 is a conceptual diagram illustrating a relationship between fitting pressure and fastening force of a bead; and
FIG. 6(a) and FIG. 6(b) are each a schematic diagram illustrating a structure of a wire in a core according to another embodiment of the present invention.

### DESCRIPTION OF THE PREFERRED EMBODIMENTS

The following will describe in detail the present invention based on preferred embodiments with reference where appropriate to the accompanying drawing.

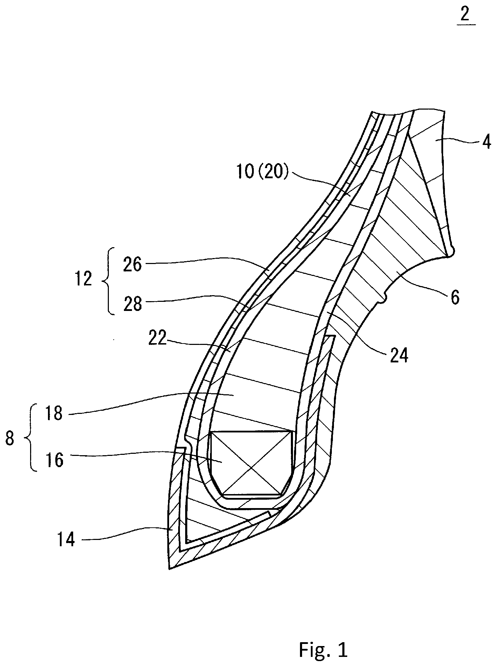

FIG. 1 shows a part of a pneumatic tire 2. In FIG. 1, the up-down direction represents the radial direction of the tire 2, the left-right direction represents the axial direction of the tire 2, and the direction orthogonal to the surface of the drawing sheet represents the circumferential direction of the tire 2. The tire 2 has a shape that is symmetric about the equator plane except for a tread pattern, which is not shown.

The tire 2 includes a pair of sidewalls 4, a pair of clinches 6, a pair of beads 8, a carcass 10, an inner liner 12, and a pair of chafers 14. In addition thereto, the tire 2 further includes a tread, a belt, and a band, which are not shown. The tire 2 is of a tubeless type. The tire 2 is mounted to a passenger car.

The tread has a shape that projects outward in the radial direction, which is not shown. The tread forms a tread surface that comes into contact with a road surface. Grooves are formed in the tread surface. A tread pattern is formed by the grooves. The tread is formed of crosslinked rubber excellent in wear resistance, heat resistance, and grip performance.

The sidewalls 4 extend almost inward from ends, respectively, of the tread in the radial direction. The sidewalls 4 are formed of crosslinked rubber excellent in cut resistance and weather resistance. The sidewalls 4 prevent damage to the carcass 10.

The clinches 6 are disposed almost inward of the sidewalls 4, respectively, in the radial direction. The clinches 6 are disposed outward of the beads 8 and the carcass 10 in the axial direction. The clinches 6 are formed of crosslinked rubber excellent in wear resistance. The clinch 6 comes into contact with a flange of a rim.

The beads 8 are disposed inward of the clinches 6, respectively, in the axial direction. The beads 8 extend in the circumferential direction. Each bead 8 includes a core 16 and an apex 18 that extends outward from the core 16 in the radial direction. The core 16 is ring-shaped. The apex 18 is tapered outward in the radial direction. The apex 18 is formed of highly hard crosslinked rubber.

The carcass 10 includes a carcass ply 20. The carcass ply 20 is extended on and between the beads 8 on both sides, along the tread and the sidewalls 4. The carcass ply 20 is turned up around the cores 16 from the inner side toward the outer side in the axial direction. By the turning-up, the carcass ply 20 includes a main portion 22 and turned-up portions 24. The carcass 10 may include two or more carcass plies 20.

The carcass ply 20 includes multiple cords aligned with each other, and topping rubber, which is not shown. An absolute value of an angle of each cord relative to the equator plane is from 75°to 90°. In other words, the carcass 10 forms a radial structure. The cords are formed of an organic fiber. Preferable examples of the organic fiber include polyester fibers, nylon fibers, rayon fibers, polyethylene naphthalate fibers, and aramid fibers.

The belt is disposed inward of the tread in the radial direction, which is not shown. The belt is layered over the carcass 10. The belt reinforces the carcass 10. The belt includes an inner layer and an outer layer. Each of the inner layer and the outer layer includes multiple cords aligned with each other, and topping rubber, which is not shown. Each cord is tiled relative to the equator plane. An absolute value of the tilt angle is greater than or equal to 10° and not greater than 35° in general. A direction in which the cords of the inner layer are tilted relative to the equator plane is opposite to a direction in which the cords of the outer layer are tilted relative to the equator plane. A material of the cords is preferably steel. An organic fiber may be used for the cords. The belt may include three or more layers.

The band is disposed inward of the tread in the radial direction, which is not shown. The band is disposed outward of the belt in the radial direction. The band is layered over the belt. The band is formed of a cord and topping rubber. The cord is helically wound. The band has a so-called jointless structure. The cord extends substantially in the circumferential direction. An angle of the cord relative to the circumferential direction is less than or equal to 5°and more preferably less than or equal to 2°. The band can contribute to stiffness of the tire 2 in the radial direction. The band allows influence of centrifugal force that acts during running to be reduced. The tire 2 is excellent in high speed stability. A material of the cord is preferably steel. An organic fiber may be used for the cord. Preferable examples of the organic fiber include nylon fibers, polyester fibers, rayon fibers, polyethylene naphthalate fibers, and aramid fibers.

The inner liner 12 is disposed inward of the carcass 10. The inner liner 12 is joined to the inner surface of the carcass 10. The inner liner 12 includes a main layer and a tie gum layer. The inner liner 12 is formed of a main layer 26 and a tie gum layer 28. The main layer 26 forms the inner surface of the tire 2. The main layer 26 is formed of crosslinked rubber excellent in air-tightness. The main layer 26 functions to maintain internal pressure. In the present embodiment, the main layer 26 extends up to portions inward of the beads 8 in the radial direction. The main layer 26 is layered over the chafers 14 in the portions inward of the beads 8 in the radial direction. The tie gum layer 28 is layered over the main layer 26. The tie gum layer 28 is formed of crosslinked rubber excellent in adhesiveness.

The chafers 14 are disposed near the beads 8, respectively. When the tire 2 is mounted on a rim, the chafers 14 come into contact with the rim. By the contact, portions near the beads 8 are protected. In the tire 2, the chafers 14 are formed of a fabric and rubber impregnated into the fabric. The chafers 14 may be integrated with the clinches 6.

In the present invention, the dimensions and angles of the components of the tire 2 are measured in a state where the tire 2 is mounted on a normal rim, and the tire 2 is inflated with air to a normal internal pressure. During the measurement, no load is applied to the tire 2. In the description herein, the normal rim represents a rim that is specified according to the standard with which the tire 2 complies. The "standard rim" in the JATMA standard, the "Design Rim" in the TRA standard, and the "Measuring Rim" in the ETRTO standard are included in the normal rim. In the description herein, the normal internal pressure represents an internal pressure that is specified according to the standard with which the tire 2 complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are included in the normal internal pressure. In the case of the tire 2 for a passenger car, the dimensions and angles are measured in a state where the internal pressure is 180 kPa.

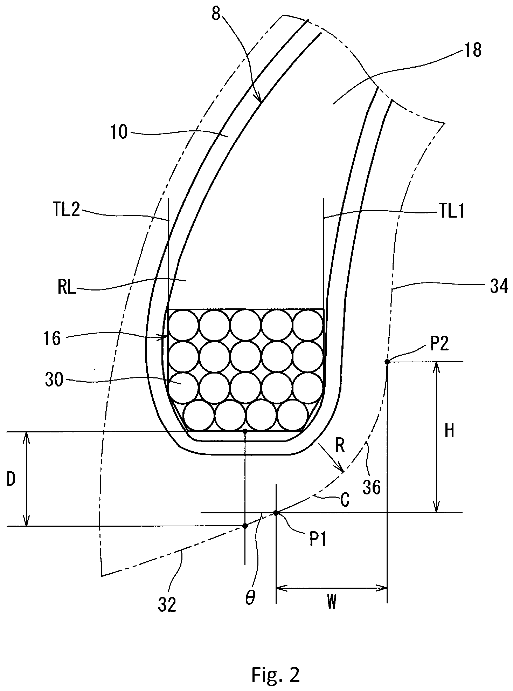

FIG. 2 shows the cross-section of the core 16 and the carcass 10 together with the outline of the bead 8 portion of the tire 2. The core 16 includes a non-stretchable wire wound in the circumferential direction. The core 16 is formed by one wire being wound. The core 16 may be formed by two or more wires being wound. In other words, the core 16 has a helical structure in which at least one non-stretchable wire extends almost in the circumferential direction. A typical material of the wire is steel.

As shown in FIG. 2, on the cross-section obtained by cutting at a plane perpendicular to the circumferential direction, a plurality of cross-sections 30 (wire cross-sections 30) of the wire are aligned in the core 16. Each of the wire cross-sections 30 is round. In the core 16, three or more rows in each of which the wire cross-sections 30 are aligned, are layered. The direction in which the row extends is referred to as a wire row direction. In FIG. 2, the wire row direction is almost the axial direction. An angle between the wire row direction and the axial direction is less than or equal to 20° in general. In the core 16 shown in FIG. 2, four rows are layered. Among the rows, the radially innermost row is referred to as a first row. A row layered outward of the first row in the radial direction is referred to as a second row. These rows are referred to as the first row, the second row, a third row, and a fourth row in order from the inner side toward the outer side. As shown in FIG. 2, in the tire 2, positions of the wire cross-sections 30 in the first row and positions of the wire cross-sections 30 in the second row are shifted from each other in the wire row direction. These cross-sections are disposed zigzaggedly. In other words, the wire cross-sections 30 in the first row and the wire cross-sections 30 in the second row are staggered.

In the tire 2, the number N1 of the wire cross-sections 30 in the first row is less, by one, than the number N2 of the wire cross-sections 30 in the second row. In the core 16 of the embodiment shown in FIG. 2, the number N1 is 4 and the number N2 is 5.

In the tire 2, positions of the outer side ends (ends positioned on the outer side in the axial direction) of at least two rows are equal to each other in the wire row direction, and the outer side ends are disposed outward of an outer side end of another row. The common tangent line, which is tangent to the outer side ends of the rows in which positions of the outer side ends are equal to each other in the wire row direction, extends in the direction perpendicular to the wire row direction. In the embodiment shown in FIG. 2, positions of the outer side ends of the second row, the third row, and the fourth row are equal in the wire row direction. These outer side ends are disposed outward of the outer side end of the first row. The common tangent line TL1 which is tangent to the outer side ends of the second row, the third row, and the fourth row, extends in the direction perpendicular to the wire row direction. In the present embodiment, the common tangent line TL1 extends almost in the radial direction.

In the tire 2, positions of the inner side ends (ends positioned on the inner side in the axial direction) of at least two rows are equal to each other in the wire row direction, and the inner side ends are disposed inward of an inner side end of another row. The common tangent line, which is tangent to the inner side ends of the rows in which positions of the inner side ends are equal to each other in the wire row direction, extends in the direction perpendicular to the wire row direction. In the embodiment shown in FIG. 2, positions of the inner side ends of the second row, the third row, and the fourth row are equal in the wire row direction. These inner side ends are disposed inward of the inner side end of the first row. The common tangent line TL2 which is tangent to the inner side ends of the second row, the third row, and the fourth row, extends in the direction perpendicular to the wire row direction. In the present embodiment, the common tangent line TL2 extends almost in the radial direction.

As shown in FIG. 2, the outer surface of each bead 8 portion includes: a bottom surface 32 that comes into contact with a seat surface of a rim when the tire 2 is mounted on the normal rim; a side surface 34 that comes into contact with a flange of a rim; and a heel surface 36 disposed between the bottom surface 32 and the side surface 34. In the tire 2, on the cross-section obtained by cutting the tire 2 at the plane perpendicular to the circumferential direction, the outline of the heel surface 36 represents an arc C that projects toward the outside of the bead 8 portion. The arc C projects toward the rim. That is, the center of the circle having the arc C is disposed outward of the bottom surface 32 in the radial direction. The center of the circle having the arc C is disposed inward of the side surface 34 in the axial direction. In the present embodiment, the outline of the bottom surface 32 represents almost a straight line. The outline of the side surface 34 represents almost a straight line in a portion outward of the heel surface 36 in the radial direction. In FIG. 2, a point P1 represents a contact point at which the bottom surface 32 and the heel surface 36 contact with each other. The bottom surface 32 and the heel surface 36 contact with each other at the point P1. A point P2 represents a contact point at which the heel surface 36 and the side surface 34 contact with each other. The heel surface 36 and the side surface 34 contact with each other at the point P2.

In FIG. 2, an arrow R represents a radius of curvature of the arc C. In the tire 2, the radius R of curvature is greater than or equal to 9 mm and not greater than 11 mm.

Hereinafter, an action and effect of the present invention will be described.

For a normal rim, an allowable rim diameter range (upper limit and lower limit) are defined. Also for a rim in which the rim diameter indicates the lower limit value in a standard, fastening force, of a bead, sufficient for preventing rim shifting needs to be maintained. Also for a rim in which the rim diameter indicates the upper limit value in the standard, fitting pressure that allows mounting on the rim to be facilitated, needs to be maintained. In conventional tires, a proportion of change in fastening force of a bead relative to change in rim diameter is great. Therefore, reduction of fastening force of a bead is great for a rim in which the rim diameter indicates the lower limit value. If sufficient fastening force of a bead is to be obtained by reduction of a bead diameter for the rim, the bead diameter needs to be greatly reduced. In this case, fitting pressure is further increased for a rim in which the rim diameter indicates the upper limit value. Further, in conventional tires, fastening force of a bead greatly varies even among rims having the same rim diameter. Thus, it has been difficult to improve both rim-shifting preventing performance and mountability on a rim.

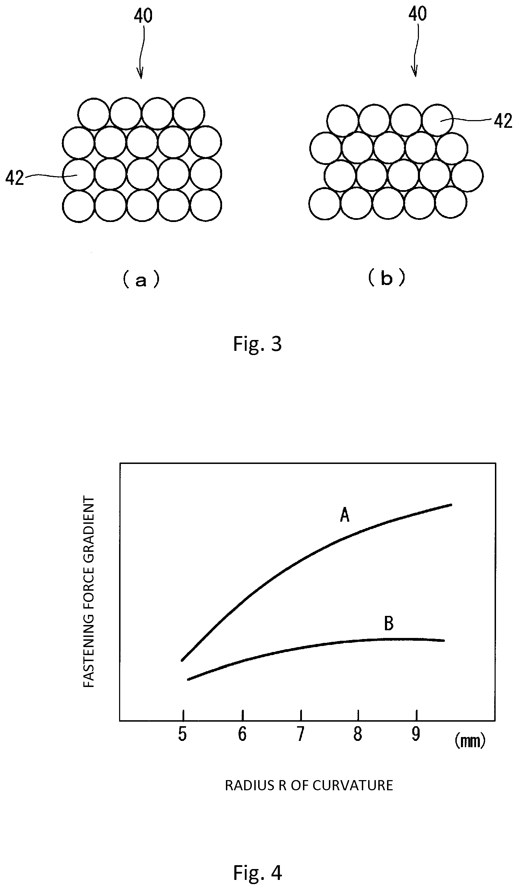

FIG. 3(a) is a schematic diagram illustrating an example of a structure of a wire in a core 40 of a conventional tire. In the core 40, one non-stretchable wire is wound in the circumferential direction. In the core 40, the number of wire cross-sections 42 is 5 in each of the first row to the third row. In the core 40 having such a structure, in the first row to the third row, one wire cross-section 42 is disposed outward of one wire cross-section 42 in the radial direction. In this structure, positions of the wire cross-sections 42 are likely to be shifted. As shown in FIG. 3(b), when force is applied to the bead 8, the positions of the wire cross-sections 42 are shifted, whereby the core 40 may be deformed. The width of the core 40 is substantially increased, and a proportion of change in fastening force of the bead is increased in the case of force being applied to the bead 8. The inventors have found that the deformation of the core 40 is one of causes of increasing a fastening force gradient. The inventors have found that, in particular, shifting of the wire cross-sections 42 of the first row and the wire cross-sections 42 of the second row relative to each other causes increase of a fastening force gradient. Further, the deformation of the core 40 causes increase of variation in fastening force of the bead and fitting pressure. In the case of the tire having the core 40, fastening force of the bead and fitting pressure vary for each tire.

In some cases, a core is formed by a tape having a plurality of wires aligned with each other being wound in the circumferential direction, which is not shown. Also in the core, the number of the wire cross-sections is equal in each row on the cross-section of the core. One wire cross-section is disposed outward of one wire cross-section in the radial direction. In this structure, positions of the wire cross-sections are likely to be shifted. In the tire, a fastening force gradient is great. In the tire, variation in fastening force of a bead and fitting pressure is great.

In the core 16 of the tire 2 according to the present invention, the wire cross-sections 30 in the first row and the wire cross-sections 30 in the second row are staggered. The number N1 of the wire cross-sections 30 in the first row is less, by one, than the number N2 of the wire cross-sections 30 in the second row. In this structure, each one of the wire cross-sections 30 in the second row is disposed between two of the wire cross-sections 30 in the first row except for the wire cross-sections 30 disposed on both ends in the second row. These wire cross-sections 30 are each supported by two of the wire cross-sections 30 in the first row. Shifting of the positions of the wire cross-sections 30 in the second row relative to the positions of the wire cross-sections 30 in the first row is inhibited even when force is applied to the bead 8. In the core 16, in particular, shifting of positions of the wire cross-sections 30 in the first row and the second row, which exert influence on fastening force of the bead, is inhibited. The tire 2 allows the fastening force gradient to be reduced. Further, in the tire 2, since shifting of the wire cross-sections 30 is inhibited, variation in fastening force of the bead and fitting pressure in the tire 2 is reduced. In the tire 2, variation in fastening force of the bead and fitting pressure is small.

In the core 16 of the tire 2 according to the present invention, positions of the outer side ends of at least two rows are equal to each other in the wire row direction, and the outer side ends are disposed outward of an outer side end of another row. The common tangent line, which is tangent to the outer side ends of the rows in which positions of the outer side ends are equal to each other in the wire row direction, extends in the direction perpendicular to the wire row direction. Further, positions of the inner side ends of at least two rows are equal to each other in the wire row direction, and the inner side ends are disposed inward of an inner side end of another row. The common tangent line, which is tangent to the inner side ends of the rows in which positions of the inner side ends are equal to each other in the wire row direction, extends in the direction perpendicular to the wire row direction. Thus, in a case where the tire 2 is manufactured, when the core 16 is set in a manufacturing machine, deformation of the core 16 is prevented. When force is applied to the bead 8, deformation of the core 16 is inhibited. The tire 2 allows the fastening force gradient to be reduced. In the tire 2, variation in fastening force of the bead and fitting pressure is small.

In the core 16 of the tire 2 according to the present invention, the outline of the heel surface 36 is formed into the arc C that projects toward the outside of the bead 8 portion. The radius R of curvature of the arc C is greater than or equal to 9 mm and not greater than 11 mm. As compared to a conventional tire, the radius of curvature of the arc C is greater. The heel surface 36, which has the outline in which the radius R of curvature is great, allows the bead 8 portion to be moved over a hump of a rim with a low pressure when the tire 2 is fitted onto the rim. The heel surface 36 effectively contributes to reduction of fitting pressure. In the tire 2, fitting pressure is lower than in conventional tires.

FIG. 4 shows a graph that conceptually represents a relationship between the radius R of curvature and a fastening force gradient. In the graph, the fastening force gradient represents a proportion of change of fastening force of a bead relative to change of a rim diameter between "rim reference diameter - 0.29 mm" and "rim reference diameter + 0.38 mm". In FIG. 4, a line A represents a relationship between the radius R of curvature and the fastening force gradient for a tire having the structure, of the core 40, shown in FIG. 3(a). The fastening force gradient is increased according to the radius R of curvature being increased.

A line B represents a relationship between the radius R of curvature and the fastening force gradient for the tire 2 having the structure, of the core 16, shown in FIG. 2. As described above, in the tire 2 of the present invention, the number N1 of the wire cross-sections 30 in the first row is less, by one, than the number N2 of the wire cross-sections 30 in the second row. As shown in FIG. 2, the outer shape of the core 16 includes a cut portion at the corner on the heel surface 36 side. Therefore, even when the radius R of curvature of the arc C is increased, the thickness between the core 16 and the heel surface 36 is sufficiently assured. Thus, increase of the fastening force gradient in the case of the radius R of curvature being increased is inhibited as compared to a conventional tire. That is, as shown in FIG. 4, the gradient of the line B is less than the gradient of the line A. In the tire 2 of the present invention, even when the radius R of curvature is increased, the fastening force gradient is appropriately maintained. When arranging of the wire cross-sections 30 on the cross-section of the core 16 as described above, and the radius R of curvature, of the outline of the heel surface 36, which is greater than or equal to 9 mm and not greater than 11 mm, are combined with each other, fitting pressure can be reduced while the fastening force gradient is reduced for the bead 8. In the tire 2, both for a rim having an upper limit rim diameter in a standard and for a rim having a lower limit rim diameter in the standard, rim-shifting preventing performance and mountability on a rim are advantageously achieved.

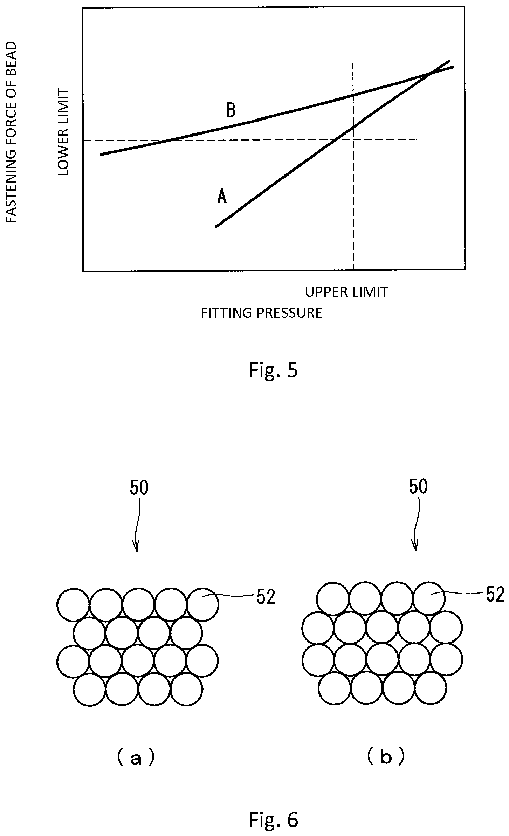

FIG. 5 shows a graph that conceptually represents a relationship between fitting pressure and fastening force of a bead. In FIG. 5, a line A represents a relationship between fitting pressure and fastening force of a bead for a conventional tire. For example, the closer the rim diameter is to the upper limit value, the higher the fitting pressure is and the higher the fastening force of the bead is. That is, fitting pressure and fastening force of the bead are approximately directly proportional to each other. The line A is almost a straight line. In FIG. 5, the upper limit value of the fitting pressure and the lower limit value of the fastening force of the bead are indicated. In FIG. 5, a region in which the fitting pressure is lower than or equal to the upper limit value and the fastening force of the bead is higher than or equal to the lower limit value, is referred to as a standard applicable region. A portion, of the line A, in the standard applicable region is small. In the tire, the standards of the fitting pressure and the fastening force of the bead are not easily satisfied for a rim having an upper limit rim diameter in the standard and a rim having a lower limit rim diameter in the standard. For the tire, rim-shifting preventing performance and mountability on a rim are not easily improved.

In FIG. 5, a line B represents a relationship between fitting pressure and fastening force of the bead for the tire 2 according to the present invention. The tire 2 of the present invention allows the fastening force gradient to be reduced. Therefore, for example, if the rim diameter is close to the upper limit value, increase of the fastening force of the bead is small. That is, the gradient of the line B is less than the gradient of the line A. Further, in the tire 2 of the present invention, fitting pressure is low. The line B is positioned on the left side in FIG. 5 as compared to the line A. Thus, a portion, of the line B, in the standard applicable region is greater than the portion, of the line A, in the standard applicable region. In the tire 2 of the present invention, the standards of the fitting pressure and the fastening force can be easily satisfied for a rim having an upper limit rim diameter in the standard and a rim having a lower limit rim diameter in the standard. In the tire 2 of the present invention, fitting pressure can be reduced and fastening force of the bead can be increased as compared to conventional tires. In the tire 2 of the present invention, rim-shifting preventing performance and mountability on a rim are advantageously achieved both for a rim having an upper limit rim diameter in the standard and for a rim having a lower limit rim diameter in the standard.

When the radius R of curvature is greater than or equal to 9 mm, the heel surface 36 more effectively contributes to reduction of fitting pressure. In the tire 2, fitting pressure is reduced as compared to a conventional tire. When the radius R of curvature is not greater than 11 mm, the thickness between the core 16 and the heel surface 36 is sufficiently assured in the tire 2. Thus, increase of the fastening force gradient is effectively inhibited.

In FIG. 2, a double-headed arrow W represents a width, in the axial direction, of the arc C. The width W is preferably greater than or equal to 6.0 mm. When the width W is greater than or equal to 6.0 mm, the heel surface 36 more effectively contributes to reduction of fitting pressure. In the tire 2, fitting pressure is reduced as compared to a conventional tire. In this viewpoint, the width W is more preferably greater than or equal to 6.2 mm. The width W is preferably not greater than 7.0 mm. When the width W is not greater than 7.0 mm, the thickness between the core 16 and the heel surface 36 is sufficiently assured in the tire 2. Thus, increase of the fastening force gradient is effectively inhibited. In this viewpoint, the width W is more preferably not greater than 6.8 mm. In this viewpoint, the width W is most preferably 6.4 mm.

In FIG. 2, a double-headed arrow H represents a height, in the radial direction, of the arc C. The height H is preferably greater than or equal to 8.5 mm. When the height H is greater than or equal to 8.5 mm, the heel surface 36 more effectively contributes to reduction of fitting pressure. In the tire 2, fitting pressure is reduced as compared to a conventional tire. In this viewpoint, the height H is more preferably greater than or equal to 8.6 mm. The height H is preferably not greater than 9.0 mm. When the height H is not greater than 9.0 mm, the thickness between the core 16 and the heel surface 36 is sufficiently assured in the tire 2. Thus, increase of the fastening force gradient is effectively inhibited. In this viewpoint, the height H is more preferably not greater than 8.9 mm.

In FIG. 2, an angle θ represents an angle of the bottom surface 32 relative to the axial direction at the contact point P1. The angle 9 is greater than or equal to 15° and not greater than 20°. When the angle θ is greater than or equal to 15° and not greater than 20°, the bottom surface 32 can come into close contact with a seat surface of a rim. The bottom surface 32 effectively contributes to prevention of rim shifting. In the tire 2, rim-shifting preventing performance is advantageous. In this viewpoint, the angle θ is most preferably 17°. The preferable range of the angle θ is determined based on the premise that the tire 2 is mounted on a rim in which an angle of the seat surface thereof relative to the axial direction is 5°.

As described above, the main layer 26 of the inner liner 12 preferably extends up to portions inward of the beads 8 in the radial direction. The main layer 26 is preferably layered over the chafers 14. The main layer 26 contributes to maintaining of the internal pressure of the tire 2. In the tire 2, internal pressure maintaining performance is advantageous.

As shown in FIG. 2, the surface, which contacts with the radially inner side end of the wire disposed in the first row, forms the radially inner side surface of the core 16. In FIG. 2, a double-headed arrow D represents a distance, in the radial direction, between the bottom surface 32 and the radially inner side surface of the core 16 at the mid-point of the first row. The distance D is preferably greater than or equal to 2.5 mm. When the distance D is greater than or equal to 2.5 mm, the thickness between the core 16 and the bottom surface 32 is sufficiently assured. This leads to reduction of a fastening force gradient. In the tire 2, both for a rim having an upper limit rim diameter in a standard and for a rim having a lower limit rim diameter in the standard, rim-shifting preventing performance and mountability on a rim are advantageously achieved. The distance D is preferably not greater than 4.5 mm. When the distance D is not greater than 4.5 mm, the thickness between the core 16 and the bottom surface 32 is appropriately maintained. This leads to reduction of a fastening force gradient. In the tire 2, both for a rim having an upper limit rim diameter in a standard and for a rim having a lower limit rim diameter in the standard, rim-shifting preventing performance and mountability on a rim are advantageously achieved.

A fastening force gradient between "rim reference diameter - 0.29 mm" and "rim reference diameter + 0.38 mm" is preferably less than or equal to 3000 N/mm. In the tire 2 having the beads 8 that allow the fastening force gradient to be less than or equal to 3000 N/mm, both for a rim having an upper limit rim diameter in a standard and for a rim having a lower limit rim diameter in the standard, rim shifting is prevented. The tire 2 allows facilitation of fitting to be assured. In this viewpoint, the fastening force gradient is more preferably less than or equal to 2800 N/mm.

FIG. 6(a) and FIG. 6(b) each show an example of a structure of a cross-section of a core 50 according to another embodiment of the present invention. In the core 50, wire cross-sections 52 in the first row and wire cross-sections 52 in the second row are staggered. The number of the wire cross-sections 52 in the first row is less, by one, than the number of the wire cross-sections 52 in the second row. In the tire, positions of the outer side ends (ends positioned on the outer side in the axial direction) of at least two rows are equal to each other in the wire row direction, and the outer side ends are disposed outward of an outer side end of another row. The common tangent line, which is tangent to the outer side ends of the rows in which positions of the outer side ends are equal to each other in the wire row direction, extends in the direction perpendicular to the wire row direction. Further, positions of the inner side ends of at least two rows are equal to each other in the wire row direction, and the inner side ends are disposed inward of an inner side end of another row. The common tangent line, which is tangent to the inner side ends of the rows in which positions of the inner side ends are equal to each other in the wire row direction, extends in the direction perpendicular to the wire row direction. In the cores 50, deformation is prevented. In the tire having the cores 50, a fastening force gradient is reduced. The tire having the cores 50 allows variation in fastening force of the bead and fitting pressure to be reduced. In the tire, both for a rim having an upper limit rim diameter in a standard and for a rim having a lower limit rim diameter in the standard, rim-shifting preventing performance and mountability on a rim are advantageously achieved.

### EXAMPLES

### [Example 1]

A tire of example 1 having the structure shown in FIG. 1 and the specifications indicated below in Table 1, was obtained. The size of the tire was 215/45R17. In the tire, the structure of the cores was as shown in FIG. 2. This is indicated as "FIG. 2" in the cell for the core structure in Table 1. The width W, in the axial direction, of the arc C was 6.4 mm. The angle θ of the bottom side of the core relative to the axial direction was 17°. In the tire, the distance D was 4.2 mm. This distance D was longer, by 5%, than a distance between the core and the bottom surface of the tire of comparative example 1.

### [Comparative example 1]

The tire of comparative example 1 was the same as the tire of example 1 except that the structure of the cores was as shown in FIG. 3(a), and the radius R of curvature was as indicated in Table 1. This tire was a conventional tire. Table 1 indicates that the structure of the cores was as shown in FIG. 3(a) since "FIG. 3(a)" is merely indicated in the cell for the core structure in Table 1.

### [Comparative example 2]

A tire of comparative example 2 was obtained in the same manner as for comparative example 1 except that the radius R of curvature was as indicated in Table 1.

### [Comparative example 3, Examples 2 to 4]

Tires of comparative example 3 and examples 2 to 4 were each obtained in the same manner as for example 1 except that the radius R of curvature was as indicated in Table 2.

### [Fastening force of bead and standard deviation thereof]

For 10 tires of each of examples and comparative examples, fastening force of the bead was measured by using a Hofmann fastening force testing machine in a method specified in Wdk116 (German Rubber Industry Association). The rim diameter was a reference diameter. For the tires of each of examples and comparative examples, an average value (fastening force of bead) and a standard deviation (fastening force σ) of the measurement results are each indicated below in Tables 1 and 2 as an index with the result of comparative example 1 being 100. For the average value, the greater the value of the index is, the better the result is. For the standard deviation, the less the value of the index is, the better the result is.

### [Fastening force gradient]

For the tires of examples and comparative examples, a fastening force gradient was measured by using a Hofmann fastening force testing machine in a method specified in Wdk116 (German Rubber Industry Association). The fastening force gradient was measured between "reference diameter - 0.29 mm" and "reference diameter + 0.38 mm". The results are each indicated below in Tables 1 and 2 as an index with the result of comparative example 1 being 100. The less the value of the index is, the better the result is.

### [Fitting pressure and standard deviation thereof]

10 tires of each of examples and comparative examples were mounted on normal rims (size=17×7.0J), and inflated with air. The rims in which the rim diameter was a reference diameter, were used. A pressure (fitting pressure) was measured when the bead portion of the tire was moved over a hump of the rim. For the tires of each of examples and comparative examples, an average value (fitting pressure) and a standard deviation (fitting pressure σ) of the measurement results are each indicated below in Tables 1 and 2 as an index with the result of comparative example 1 being 100. For both the average value and the standard deviation, the less the value of the index is, the better the result is.

### [Rim-shifting preventing performance]

Each tire was mounted on a normal rim (size: 17×7.0J) and inflated with air to an internal pressure of 240 kPa. The tire was mounted to a vehicle. By using the vehicle, an operation of braking the vehicle to a halt at the speed of 50 km/h on a dry road surface in a test course was performed repeatedly 20 times. For the tire, an amount of shifting between the tire and the rim was measured. The rim-shifting preventing performance obtained from the measurement result is indicated below in Tables 1 and 2 as an index with the result of comparative example 1 being 100. The greater the value of the index is, the better the result is.

**Table 1 Evaluation result**

| | Comparative example 1 | Comparative example 2 | Example 1 |
|---|---|---|---|
| Core structure | FIG. 3(a) | FIG. 3(a) | FIG. 2 |
| Radius R of curvature [mm] | 6 | 8 | 8 |
| Fitting pressure | 100 | 65 | 61 |
| Fitting pressure σ | 100 | 80 | 20 |
| Fastening force of bead | 100 | 110 | 110 |
| Fastening force of bead σ | 100 | 111 | 18 |
| Fastening force gradient | 100 | 114 | 74 |
| Rim-shifting preventing performance | 100 | 110 | 110 |

**Table 2 Evaluation result**

| | Comparative example 3 | Example 2 | Example 3 | Comparative example 4 |
|---|---|---|---|---|
| Core structure | FIG. 2 | FIG. 2 | FIG. 2 | FIG. 2 |
| Radius R of curvature [mm] | 6 | 10 | 12 | 13 |
| Fitting pressure | 96 | 58 | 56 | 56 |
| Fitting pressure σ | 20 | 20 | 20 | 20 |
| Fastening force of bead | 95 | 112 | 100 | 92 |
| Fastening force of bead σ | 17 | 18 | 18 | 18 |
| Fastening force gradient | 71 | 74 | 74 | 92 |
| Rim-shifting preventing performance | 100 | 112 | 100 | 90 |

As indicated in Tables 1 and 2, the evaluation is higher in the tires of examples than in the tires of comparative examples. The evaluation result clearly indicates that the present invention is superior.

The structure of the bead portion which is described above is applicable also to various tires.

The foregoing description is in all aspects illustrative, and various modifications can be devised without departing from the essential features of the invention.

## Claims

1. A pneumatic tire (2) comprising:
a pair of beads (8), wherein
each bead (8) includes a core (16),
the core (16) has a helical structure in which at least one non-stretchable wire extends almost in a circumferential direction,
on a cross-section obtained by the core (16) being cut at a plane perpendicular to the circumferential direction, three or more rows in each of which cross-sections (30) of the wire are aligned almost in an axial direction, are layered in a radial direction,
when, among the rows, a row disposed on an innermost side in the radial direction is a first row, and a row layered outward of the first row is a second row,
the cross-sections (30) of the wire in the first row and the cross-sections (30) of the wire in the second row are staggered,
a number N1 of the cross-sections (30) of the wire in the first row is less, by one, than a number N2 of the cross-sections (30) of the wire in the second row,
positions of outer side ends of at least two of the rows are equal to each other in a direction in which each row extends, and the outer side ends are disposed outward of an outer side end of other of the rows,
positions of inner side ends of at least two of the rows are equal to each other in the direction in which each row extends, and the inner side ends are disposed inward of an inner side end of other of the rows, and
on a cross-section obtained by the tire (2) being cut at a plane perpendicular to the circumferential direction, an outline of a heel surface (36) of a bead portion of each bead (8) has an arc (C) that projects toward an outside of the bead portion,
**characterized in that**
a radius (R) of curvature of the arc (C) is greater than or equal to 9 mm and not greater than 11 mm and
on a cross-section obtained by the tire (2) being cut at a plane perpendicular to the circumferential direction, an angle (θ) of a bottom surface (32) of the bead portion relative to the axial direction is greater than or equal to 15° and not greater than 20°.

2. The tire (2) according to claim 1, wherein a width (W), in the axial direction, of the arc (C) is greater than or equal to 6.0 mm and not greater than 7.0 mm.

3. The tire (2) according to claim 1 or 2, further comprising an inner liner (12) and chafers (14), wherein
the inner liner (12) includes a main layer (26) that forms an inner surface of the tire (2), and a tie gum layer (28) layered over the main layer (26), and
the main layer (26) extends, in portions inward of the beads (8) in the radial direction, up to portions outward of the chafers (14) in the radial direction.

## Patentansprüche

1. Luftreifen (2), umfassend:
ein Paar Wülste (8), wobei
jede Wulst (8) einen Kern (16) aufweist,
der Kern (16) eine helikale Struktur aufweist, in der sich zumindest ein nicht dehnbarer Draht nahezu in einer Umfangsrichtung erstreckt,
in einem Querschnitt, der durch einen Schnitt durch den Kern (16) in einer Ebene rechtwinklig zu der Umfangsrichtung erhalten wird, drei oder mehr Reihen, in welchen jeweils Querschnitte (30) des Drahtes nahezu in einer axialen Richtung ausgerichtet sind, in einer radialen Richtung geschichtet sind,
dann, wenn unter den Reihen eine Reihe, die in der radialen Richtung auf einer innersten Seite angeordnet ist, eine erste Reihe ist und eine Reihe, die außerhalb der ersten Reihe geschichtet ist, eine zweite Reihe ist,
die Querschnitte (30) des Drahtes in der ersten Reihe und die Querschnitte (30) des Drahtes in der zweiten Reihe versetzt sind,
eine Anzahl N1 der Querschnitte (30) des Drahtes in der ersten Reihe um Eins geringer als eine Anzahl N2 der Querschnitte (30) des Drahtes in der zweiten Reihe ist,
Positionen äußerer Seitenenden von zumindest zwei der Reihen in einer Richtung, in der sich jede Reihe erstreckt, einander gleich sind und die äußeren Seitenenden außerhalb eines äußeren Seitenendes einer weiteren der Reihen angeordnet sind,
Positionen innerer Seitenenden von zumindest zwei der Reihen in der Richtung, in der sich jede Reihe erstreckt, einander gleich sind und die inneren Seitenenden innerhalb eines inneren Seitenendes einer weiteren der Reihen angeordnet sind und
in einem Querschnitt, der durch einen Schnitt durch den Reifen (2) in einer Ebene rechtwinklig zu der Umfangsrichtung erhalten wird, eine Kontur einer Hinterseitenfläche (36) eines Wulstabschnitts jeder Wulst (8) einen Bogen (C) aufweist, der in Richtung einer Außenseite des Wulstabschnitts hervorsteht,
**dadurch gekennzeichnet, dass**
ein Krümmungsradius (R) des Bogens (C) größer als oder gleich 9 mm und nicht größer als 11 mm ist und
in einem Querschnitt, der durch einen Schnitt durch den Reifen (2) in einer Ebene rechtwinklig zu der Umfangsrichtung erhalten wird, ein Winkel (θ) einer Unterseitenfläche (32) des Wulstabschnitts bezogen auf die axiale Richtung größer als oder gleich 15° und nicht größer als 20° ist.

2. Reifen (2) nach Anspruch 1,
wobei eine Breite (W) des Bogens (C) in der axialen Richtung größer als oder gleich 6,0 mm und nicht größer als 7,0 mm ist.

3. Reifen (2) nach Anspruch 1 oder 2,
ferner eine Innenauskleidung (12) und Wulstschutzbänder (14) umfassend, wobei
die Innenauskleidung (12) eine Hauptschicht (26), die eine Innenfläche des Reifens (2) bildet, und eine Verbindungsgummischicht (28) aufweist, die über der Hauptschicht (26) geschichtet ist, und
sich die Hauptschicht (26) in Abschnitten in der radialen Richtung innerhalb der Wülste (8) bis zu Abschnitten in der radialen Richtung außerhalb der Wulstschutzbänder (14) erstreckt.

## Revendications

1. Bandage pneumatique (2) comprenant :
une paire de talons (8), dans lequel
chaque talon (8) inclut une âme (16),
l'âme (16) a une structure hélicoïdale dans laquelle au moins un fil non extensible s'étend pratiquement dans une direction circonférentielle,
sur une section transversale obtenue en coupant l'âme (16) au niveau d'un plan perpendiculaire à la direction circonférentielle, trois rangées ou plus, dans chacune desquelles des sections transversales (30) du fil sont alignées pratiquement dans une direction axiale, sont posées en couches dans une direction radiale,
quand, parmi les rangées, une rangée disposée sur un côté le plus à l'intérieur dans la direction axiale est une première rangée, et une rangée posée en couche vers l'extérieur de la première rangée est une deuxième rangée,
les sections transversales (30) du fil dans la première rangée et les sections transversales (30) du fil dans la deuxième rangée sont échelonnées,
un nombre N1 des sections transversales (30) du fil dans la première rangée est inférieur, de un, à un nombre N2 des sections transversales (30) du fil dans la deuxième rangée,
des positions d'extrémités latérales extérieures d'au moins deux des rangées sont égales l'une à l'autre dans une direction dans laquelle s'étend chaque rangée, et les extrémités latérales extérieures sont disposées vers l'extérieur d'une extrémité latérale extérieure de l'autre des rangées,
des positions d'extrémité latérales intérieures d'au moins deux des rangées sont égales l'une à l'autre dans la direction dans laquelle s'étend chaque rangée, et les extrémités latérales intérieures sont disposées vers l'intérieur d'extrémité latérale intérieure de l'autre des rangées, et
sur une section transversale obtenue en coupant le pneumatique (2) au niveau d'un plan perpendiculaire à la direction circonférentielle, un contour d'une surface arrière (36) d'une portion formant talon de chaque talon (8) a un arc (C) qui se projette en direction d'une partie extérieure de la portion formant talon,
**caractérisé en ce que**
un rayon (R) de courbure de l'arc (C) est supérieur ou égal à 9 mm et n'est pas supérieur à 11 mm, et
sur une section transversale obtenue en coupant le pneumatique (2) au niveau d'un plan perpendiculaire à la direction circonférentielle, un angle (θ) d'une surface de fond (32) de la portion formant talon relativement à la direction axiale est supérieur ou égal à 15° et n'est pas supérieur à 20°.

2. Pneumatique (2) selon la revendication 1, dans lequel une largeur (W), dans la direction axiale de l'arc (C) est supérieure ou égale à 6,0 mm et n'est pas supérieure à 7,0 mm.

3. Pneumatique (2) selon la revendication 1 ou 2, comprenant en outre un doublage interne (12) et des bandelettes de talons (14), dans lequel
le doublage interne (12) inclut une couche principale (26) qui forme une surface interne du pneumatique (2), et une couche de gomme de liaison (28) posée en couche sur la couche principale (26), et
la couche principale (26) s'étend, dans des portions vers l'intérieur des talons (8) dans la direction radiale, jusqu'à des portions vers l'extérieur des bandelettes de talons (14) dans la direction radiale.
